# EUROPEAN PATENT APPLICATION

(11) **EP 4 670 823 A1**
(43) Date of publication of application: **31.12.2025**
(21) Application number: 23930533.7
(22) Date of filing: 30.03.2023
(51) Int. Cl.: B01D 53/62

(54) **CARBON DIOXIDE RECOVERY SYSTEM**

(71) Applicant: MITSUBISHI HEAVY INDUSTRIES, LTD., Chiyoda-ku Tokyo 100-8332 (JP)
(72) Inventor: KONDO, Shigeki, Yokohama-shi, Kanagawa 220-0012 (JP); KAMIJO, Takashi, Yokohama-shi, Kanagawa 220-8401 (JP); KISHIMOTO, Shinya, Yokohama-shi, Kanagawa 220-8401 (JP); MORIHIRO, Teruaki, Yokohama-shi, Kanagawa 220-0012 (JP); MIYAMOTO, Osamu, Yokohama-shi, Kanagawa 220-0012 (JP); NARITA, Yuki, Yokohama-shi, Kanagawa 220-8401 (JP); ATARASHIYA, Kenji, Yokohama-shi, Kanagawa 220-0012 (JP); PALSSON, Jens, 21743 Malmo (SE); BARTLETT, Michael, 17831 Ekero (SE); KOEPCKE, Moritz, 14052 Berlin (DE)
(74) Representative: Studio Torta S.p.A.
(86) International application number: PCT/JP2023/013191
(87) International publication number: WO 2024/201895

(57) **Abstract**

A carbon dioxide recovery system is provided with: a regenerator for stripping carbon dioxide from a solvent that has absorbed carbon dioxide; a flash drum for flashing the solvent supplied from the regenerator; a pressure reducing device for reducing a pressure of the solvent supplied from the regenerator to the flash drum; a reboiler for heating the solvent by heat exchange between the solvent in the flash drum and a heating fluid; and a pressure boosting device for supplying vapor generated in the flash drum to the regenerator.

## Description

### TECHNICAL FIELD

The present disclosure relates to a carbon dioxide recovery system.

### BACKGROUND

A carbon dioxide recovery system equipped with an absorber in which carbon dioxide is absorbed into a solvent by bringing gas containing carbon dioxide into gas-liquid contact with the solvent, and a regenerator in which carbon dioxide is stripped from the solvent by heating the solvent that has absorbed carbon dioxide in the absorber is disclosed in Patent Document 1 and the like. Steam is generally used as a heat source to heat the solvent in the regenerator.

### Citation List

### Patent Literature

Patent Document 1: WO2012/073553A

### SUMMARY

### Problems to be Solved

However, when the carbon dioxide recovery system is attached to a power plant, extracting steam from the power plant for the heat source in the regenerator reduces the power generation efficiency by that amount. Moreover, cases can be envisioned where steam cannot be supplied to the carbon dioxide recovery system. In such cases, it is necessary to use a heat source with a lower temperature than steam for stripping carbon dioxide from the solvent in the regenerator.

In view of the above, an object of at least one embodiment of the present disclosure is to provide a carbon dioxide recovery system that can strip carbon dioxide from a solvent in a regenerator by using a heat source with a lower temperature than steam.

### Solution to the Problems

To achieve the above object, a carbon dioxide recovery system according to the present disclosure is provided with: a regenerator for stripping carbon dioxide from a solvent that has absorbed carbon dioxide; a flash drum for flashing the solvent supplied from the regenerator; a pressure reducing device for reducing the pressure of the solvent supplied from the regenerator to the flash drum; a reboiler for heating the solvent by heat exchange between the solvent in the flash drum and a heating fluid; and a pressure boosting device for supplying vapor generated in the flash drum to the regenerator.

### Advantageous Effects

With the carbon dioxide recovery system of the present disclosure, the temperature of the solvent is lowered by flashing the solvent in the flash drum, and the solvent with the lowered temperature is supplied to the reboiler, thus lowering the temperature required for the heating fluid supplied to the reboiler. As a result, it is possible to strip carbon dioxide from the solvent in the regenerator by using a heat source with a lower temperature than steam.

### BRIEF DESCRIPTION OF DRAWINGS

FIG. 1 is a schematic configuration diagram of a carbon dioxide recovery system according to the first embodiment of the present disclosure.
FIG. 2 is a schematic configuration diagram of a modified example of the carbon dioxide recovery system according to the first embodiment of the present disclosure.
FIG. 3 is a configuration diagram of another modified example of the carbon dioxide recovery system according to the first embodiment of the present disclosure.
FIG. 4 is a schematic configuration diagram of a carbon dioxide recovery system according to the second embodiment of the present disclosure.
FIG. 5 is a schematic configuration diagram of a carbon dioxide recovery system according to the third embodiment of the present disclosure.
FIG. 6 is a schematic configuration diagram of a carbon dioxide recovery system according to the fourth embodiment of the present disclosure.
FIG. 7 is a schematic configuration diagram of a modified example of the carbon dioxide recovery system according to the first, second and fourth embodiments of the present disclosure.

### DETAILED DESCRIPTION

Hereinafter, a carbon dioxide recovery system according to embodiments of the present disclosure will be described with reference to the drawings. The embodiment to be described below indicates one aspect of the present disclosure, does not intend to limit the disclosure, and can optionally be modified within a range of a technical idea of the present disclosure.

### (First Embodiment)

### <Configuration of carbon dioxide recovery system according to first embodiment of present disclosure>

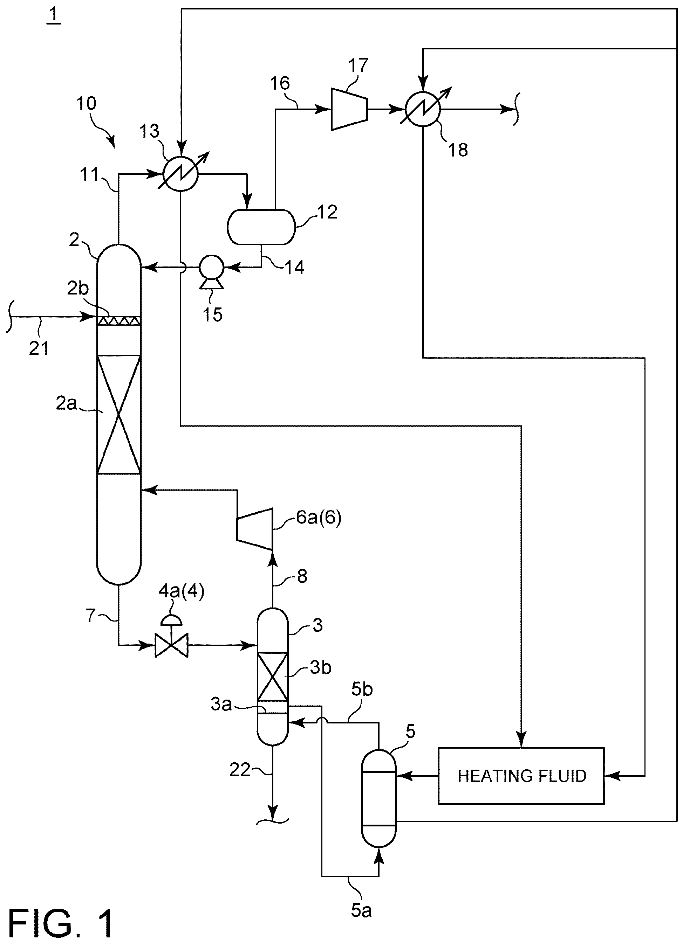

As shown in FIG. 1, a carbon dioxide recovery system 1 according to the first embodiment of the present disclosure is provided with: a regenerator 2 for stripping carbon dioxide from a solvent that has absorbed carbon dioxide; a flash drum 3 for flashing the solvent supplied from the regenerator 2; a pressure reducing valve 4a which is a pressure reducing device 4 for reducing the pressure of the solvent supplied from the regenerator 2 to the flash drum 3; a reboiler 5 for heating the solvent by heat exchange between the solvent in the flash drum 3 and a heating fluid; and a pressure boosting device 6 for supplying vapor generated in the flash drum 3 to the regenerator 2. The pressure reducing valve 4a and the pressure boosting device 6 are respectively disposed on lines 7 and 8 that connect the regenerator 2 and the flash drum 3. The pressure boosting device 6 may be, for example, a compressor 6a.

In the first embodiment, the configuration of the reboiler 5 is not limited, but a once-through, thermosiphon, or kettle reboiler can be used. In the first embodiment, the reboiler 5 is a once-through reboiler as an illustrative example. When the reboiler 5 is a once-through reboiler, a tray 3a is disposed in the flash drum 3 to collect the solvent entering the flash drum 3. A line 5a for supplying the solvent from the flash drum 3 to the reboiler 5 is connected to the flash drum 3 at a position above the tray 3a, and a line 5b for supplying the solvent from the reboiler 5 to the flash drum 3 is connected to the flash drum 3 at a position below the tray 3a.

The carbon dioxide recovery system 1 may be provided with a condensing device 10 for condensing water from effluent vapor, which is vapor discharged from the regenerator 2. The condensing device 10 may include an effluent vapor line 11 connected at one end to the regenerator 2, preferably to the top of the regenerator 2, a reflux drum 12 connected to the other end of the effluent vapor line 11, a condenser 13 disposed on the effluent vapor line 11, a condensate line 14 connecting the reflux drum 12 and the regenerator 2, and a pump 15 disposed on the condensate line 14.

As will be described later, in the reflux drum 12, liquid components and gaseous components mainly containing carbon dioxide are separated. To the reflux drum 12, in addition to the condensate line 14 for discharging the liquid components from the reflux drum 12, an effluent gas line 16 for discharging the gaseous components as effluent gas from the reflux drum 12, i.e., from the condensing device 10, may be connected. The other end of the effluent gas line 16 may be connected to a device (not shown) for consuming or storing carbon dioxide. The effluent gas line 16 may be provided with an effluent gas compressor 17 for pressurizing the effluent gas, and a heat exchanger 18 for cooling the effluent gas pressurized by the effluent gas compressor 17. The effluent gas line 16 may be provided with two or more sets of the effluent gas compressor 17 and the heat exchanger 18.

The regenerator 2 has a stripping part 2a filled with a packing material, such as Raschig rings. Above the stripping part 2a, a spray 2b for spraying rich solvent, which is the solvent that has absorbed carbon dioxide, is disposed, and one end of a rich solvent line 21, through which the rich solvent flows, is connected to the spray 2b. At the bottom of the flash drum 3, a lean solvent line 22 is connected for discharging lean solvent, which is the solvent with a relatively lower carbon dioxide content than the rich solvent by stripping carbon dioxide from the rich solvent, from the flash drum 3. The rich solvent supplied to the regenerator 2 through the rich solvent line 21 may be a solvent that has absorbed carbon dioxide in a facility outside the carbon dioxide recovery system 1 and then transported to the carbon dioxide recovery system 1. Alternatively, a device for causing the solvent to absorb carbon dioxide may be installed in the carbon dioxide recovery system 1, and the rich solvent may be supplied from this device to the regenerator 2. An example of the latter configuration will be described below as a modified example of the first embodiment.

### <Operation of carbon dioxide recovery system according to first embodiment of present disclosure>

Next, the operation of the carbon dioxide recovery system 1 according to the first embodiment of the present disclosure will be described. The rich solvent flowing through the rich solvent line 21 is sprayed in the regenerator 2 from the spray 2b. The rich solvent sprayed in the regenerator 2 falls in the regenerator 2 and flows down the stripping part 2a in this process. While flowing down the stripping part 2a, the rich solvent comes into contact with saturated vapor, which is generated and moves upward in the regenerator 2 by the operation described below, and is thus heated. As a result, at least part of carbon dioxide is stripped from the rich solvent, and the rich solvent becomes lean solvent and is collected at the bottom of the regenerator 2.

The lean solvent in the regenerator 2 is extracted from the bottom of the regenerator 2 and flows through the line 7. When flowing through the line 7, the pressure of the lean solvent is reduced by the pressure reducing valve 4a and then it enters the flash drum 3. As the depressurized lean solvent enters the flash drum 3, the lean solvent flashes in the flash drum 3. The flash in the flash drum 3 causes carbon dioxide to be stripped from the lean solvent and water to evaporate. The flash also lowers the temperature of the lean solvent. As a result, the carbon dioxide content and temperature of the lean solvent in the flash drum 3 are decreased compared to the lean solvent that remains at the bottom of the regenerator 2.

The lean solvent in the flash drum 3 is collected on the tray 3a, and the lean solvent on the tray 3a is continuously supplied to the reboiler 5 through the line 5a. In the reboiler 5, the lean solvent is heated by heat exchange with the heating fluid, and the heated lean solvent is returned to the flash drum 3 through the line 5b. The heating in the reboiler 5 also causes carbon dioxide to be stripped from the lean solvent and water to evaporate. Since the lean solvent in the reboiler 5 is the lean solvent whose temperature has been lowered by flashing in the flash drum 3, the temperature of the heating fluid required in the reboiler 5 can be lowered compared to the case where the lean solvent supplied from the regenerator 2 is heated. Therefore, in the first embodiment, instead of steam, a heat source of lower temperature (e.g., about 80°C) than steam, such as hot water, can be used as the heating fluid used in the reboiler 5, and this heat source can be used directly or via a heat pump.

The flash in the flash drum 3 and the heating of the lean solvent in the reboiler 5 produce saturated vapor mainly containing carbon dioxide and water vapor in the flash drum 3. The saturated vapor is discharged from the top of the flash drum 3, and when flowing through the line 8, rises in temperature through compression with the compressor 6a, and then enters the regenerator 2 below the stripping part 2a. The saturated vapor entering the regenerator 2 moves upward in the regenerator 2 as described above, and comes into contact with the rich solvent in the stripping part 2a.

While the lean solvent is supplied from the regenerator 2 to the flash drum 3, the lean solvent is continuously extracted from the flash drum 3. The lean solvent extracted from the flash drum 3 may be transported to an external facility where carbon dioxide is absorbed into the solvent, or may be continuously supplied to a device where carbon dioxide is absorbed into the solvent, or may be mixed with the rich solvent to be fed to the regenerator 2 and supplied to the regenerator 2.

The saturated vapor contacting the rich solvent in the stripping part 2a and flowing out of the stripping part 2a further moves upward in the regenerator 2, and then is discharged from the regenerator 2. The saturated vapor (effluent vapor) discharged from the regenerator 2 is cooled by the condenser 13 when flowing through the effluent vapor line 11 and then enters the reflux drum 12. When the saturated vapor is cooled, components with low boiling points (mainly water) condense while carbon dioxide remains a gas. Therefore, in the reflux drum 12, the condensate and gas are separated into gas and liquid phases. The gas mainly containing carbon dioxide is discharged from the reflux drum 12, or the condensing device 10, as effluent gas by the effluent gas compressor 17 and is supplied through the effluent gas line 16 to a device (not shown) for consuming or storing carbon dioxide. The temperature of the effluent gas rises as the pressure is increased by the effluent gas compressor 17, but if the heat exchanger 18 is provided downstream of the effluent gas compressor 17, the temperature of the effluent gas can be adjusted by cooling it in the heat exchanger 18.

Thus, the temperature of the lean solvent is lowered by flashing the lean solvent in the flash drum 3, and the lean solvent with the lowered temperature is supplied to the reboiler 5, thus lowering the temperature required for the heating fluid supplied to the reboiler 5. As a result, it is possible to strip carbon dioxide from the solvent in the regenerator 2 by using a heat source with a lower temperature than steam.

Additionally, compared to the case where the flash drum 3 is not provided, the temperature at the top of the regenerator 2 is lowered, so that the amount of heat exchanged in the condenser 13 of the condensing device 10 is reduced. In other words, since the amount of exhaust heat in the condensing device 10 is reduced, the specific heat duty in the carbon dioxide recovery system 1 is improved.

### <Modified example of carbon dioxide recovery system according to first embodiment of present disclosure>

In the first embodiment, heat exhausted by the carbon dioxide recovery system 1 may be used as a heat source to heat the heating fluid before supplied to the reboiler 5. That is, the system may be provided with at least one heat exchanger for heating at least part of the heating fluid by heat exchange between the at least part of the heating fluid and any of a fluid to be supplied to the carbon dioxide recovery system 1, a fluid in the carbon dioxide recovery system 1, or a fluid discharged from the carbon dioxide recovery system 1. Such a heat exchanger may be, for example, the condenser 13 (first heat exchanger) for exchanging heat between the heating fluid and the effluent vapor from the regenerator 2. Further, such a heat exchanger may be, for example, the heat exchanger 18 (second heat exchanger) for exchanging heat between the heating fluid and the effluent gas pressurized by the effluent gas compressor 17. If two or more pairs of the effluent gas compressor 17 and the heat exchanger 18 are provided, any one of the heat exchangers 18 may be used as the second heat exchanger, or they may be used such that the heating fluid passes through the at least two heat exchangers 18 in parallel or in series. Further, the first heat exchanger and the second heat exchanger may be used simultaneously.

Although the configuration inside the flash drum 3 is not specifically mentioned in the first embodiment, nothing may be provided in the interior space of the flash drum, or a packed layer 3b or the like, similar to the stripping part 2a in the regenerator 2, may be provided in the interior space of the flash drum. In the latter configuration, the drum has a stripping function of one or more theoretical stages and serves the same function as the stripping part 2a in the regenerator 2, allowing more carbon dioxide to be stripped from the solvent. If the tray 3a is disposed in the flash drum 3 (i.e., if the reboiler 5 is a once-through reboiler), the packed layer 3b is disposed above the tray 3a.

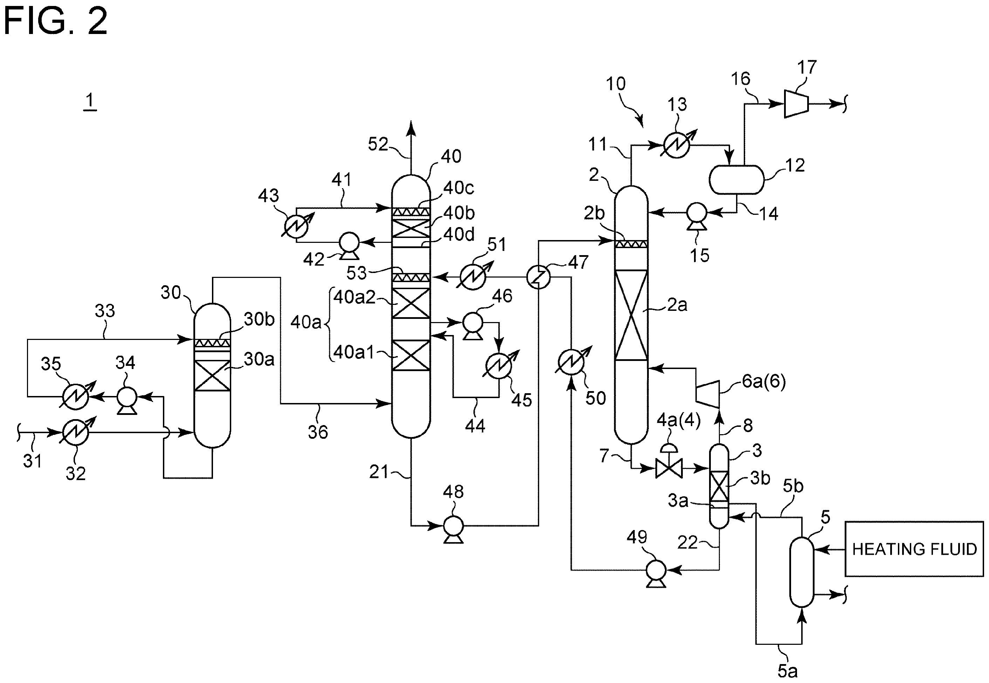

Next, an example of the carbon dioxide recovery system equipped with a device for causing the solvent to absorb carbon dioxide will be described. As shown in FIG. 2, the carbon dioxide recovery system 1 according to this modified example is provided with, as the device for causing the solvent to absorb carbon dioxide, a quencher 30 for cooling a treated gas containing at least carbon dioxide, and an absorber 40 for causing lean solvent to absorb carbon dioxide by bringing the treated gas cooled in the quencher 30 into gas-liquid contact with the lean solvent.

The quencher 30 is connected to a treated gas line 31 through which the treated gas flows. The treated gas line 31 may be provided with a heat exchanger 32 for cooling the treated gas. The quencher 30 has a cooling part 30a for cooling the treated gas by gas-liquid contact between the treated gas and cooling water. The cooling part 30a may be filled with a packing material, such as Raschig rings, for example. Above the cooling part 30a, a spray 30b for spraying cooling water is disposed, and the cooling water sprayed from the spray 30b flows down the cooling part 30a. The quencher 30 is provided with a cooling water circulation line 33 connected at one end to the bottom of the quencher 30 and the other end to the spray 30b. The cooling water circulation line 33 is provided with a pump 34 and a heat exchanger 35 for cooling the cooling water.

The quencher 30 and the absorber 40 are connected via a line 36. The absorber 40 has an absorbing part 40a in which the lean solvent absorbs carbon dioxide in the treated gas cooled by the quencher 30 and then entering the absorber 40, and a washing part 40b disposed above the absorbing part 40a for washing the gas rising in the absorber 40. In this modification, the absorbing part 40a will be described as having a two-stage configuration including a first absorbing part 40a1 and a second absorbing part 40a2. However, the absorbing part 40a may have a one-stage configuration or multiple-stage configuration of three or more. The absorber 40 is provided with a solvent circulation line 44 connected at one end and at the other end to the space between the first absorbing part 40a1 and the second absorbing part 40a2. The solvent circulation line 44 is provided with a pump 46 and a heat exchanger 45 for cooling the solvent. Each of the absorbing part 40a and the washing part 40b may be filled with a packing material, as with the cooling part 30a of the quencher 30.

Above the washing part 40b, a spray 40c for spraying wash water is disposed, and the wash water sprayed from the spray 40c flows down the washing part 40b. Below the washing part 40b, a tray 40d is disposed and is configured to collect the wash water that has flowed down the washing part 40b. The absorber 40 is provided with a wash water circulation line 41 connected at one end to the space between the washing part 40b and the tray 40d and at the other end to the spray 40c. The wash water circulation line 41 is provided with a pump 42 and a heat exchanger 43 for cooling the wash water. The top of the absorber 40 is connected to a discharge line 52 for discharging the gas in the absorber 40 from the absorber 40.

The other end of the rich solvent line 21, one end of which is connected to the regenerator 2, is connected to the bottom of the absorber 40. The other end of the lean solvent line 22, one end of which is connected to the flash drum 3, is connected to a spray 53 disposed in the space between the absorbing part 40a and the washing part 40b in the absorber 40. A heat exchanger 47 is disposed to exchange heat between the rich solvent flowing through the rich solvent line 21 and the lean solvent flowing through the lean solvent line 22. The rich solvent line 21 is provided with a rich solvent pump 48 between the absorber 40 and the heat exchanger 47. The lean solvent line 22 is provided with a lean solvent pump 49 between the regenerator 2 and the heat exchanger 47. The lean solvent line 22 may be provided with heat exchangers 50 and 51 between the lean solvent pump 49 and the heat exchanger 47 and between the heat exchanger 47 and the absorber 40, respectively, for cooling the lean solvent. Either one of the heat exchanger 50 or 51 may be provided.

Next, the operation of the carbon dioxide recovery system 1 according to this modified example will be described. The treated gas flows into the quencher 30 through the treated gas line 31. If the treated gas line 31 is provided with the heat exchanger 32, the treated gas is cooled in the heat exchanger 32 and then enters the quencher 30. The treated gas entering the quencher 30 moves upward in the quencher 30. In this process, the treated gas moves upward in the cooling part 30a. On the other hand, the cooling water sprayed from the spray 30b flows down the cooling part 30a. In the cooling part 30a, the treated gas moving upward and the cooling water flowing downward come into gas-liquid contact, so that the treated gas is cooled while the cooling water is heated. In this process, if the treated gas contains impurities (e.g., sulfur oxides, nitrogen oxides, solids such as dust and ash), the impurities are trapped by the cooling water and removed from the treated gas.

The cooling water that has flowed down the cooling part 30a is collected at the bottom of the quencher 30. The cooling water collected at the bottom of the quencher 30 is extracted from the quencher 30 by the pump 34 and circulates through the cooling water circulation line 33. The cooling water is cooled in the heat exchanger 35 when flowing through the cooling water circulation line 33 and is returned to the quencher 30. On the other hand, the treated gas that has been cooled in the cooling part 30a and from which impurities have been removed flows out of the quencher 30 through the line 36 into the absorber 40.

The treated gas entering the absorber 40 moves upward in the absorber 40. In this process, the treated gas moves upward in the absorbing part 40a. On the other hand, the lean solvent entering the absorber 40 through the lean solvent line 22 is sprayed from the spray 53 and falls in the absorber 40. In this process, the lean solvent flows down the absorbing part 40a. In the absorbing part 40a, the lean solvent absorbs carbon dioxide in the treated gas by gas-liquid contact between the treated gas moving upward and the lean solvent flowing downward, thereby removing carbon dioxide from the treated gas and reducing the carbon dioxide concentration of the treated gas. On the other hand, the lean solvent increases in carbon dioxide content to become rich solvent, which flows out of the absorbing part 40a and is collected at the bottom of the absorber 40.

The temperature of the lean solvent rises due to the gas-liquid contact between the treated gas and the lean solvent in the absorbing part 40a. As the temperature of the lean solvent rises, the absorption rate of carbon dioxide decreases. To solve this problem, part of the lean solvent is extracted from the absorbing part 40a by the pump 46, and the extracted solvent is circulated through the solvent circulation line 44, cooled in the heat exchanger 45, and then returned to the absorbing part 40a. Thus, it is possible to control the temperature rise of the lean solvent flowing down the absorbing part 40a, and reduce the decrease in the absorption rate of carbon dioxide.

The treated gas flowing out of the absorbing part 40a moves upward in the washing part 40b. On the other hand, the wash water is sprayed from the spray 40c, and the sprayed wash water flows down the washing part 40b. In the washing part 40b, the treated gas moving upward and the wash water flowing downward come into gas-liquid contact, so that solvent mist contained in the treated gas is recovered by the wash water. The treated gas flowing out of the washing part 40b is discharged from the absorber 40 and is released into the atmosphere through the discharge line 52. On the other hand, the wash water flowing out of the washing part 40b is collected on the tray 40d. The wash water on the tray 40d is extracted from the absorber 40 by the pump 42 and circulates through the wash water circulation line 41. The wash water is cooled in the heat exchanger 43 when flowing through the wash water circulation line 41 and is returned to the absorber 40.

The rich solvent collected at the bottom of the absorber 40 is extracted from the absorber 40 by the rich solvent pump 48 and flows through the rich solvent line 21 into the regenerator 2. The operation of stripping carbon dioxide from the rich solvent in the regenerator 2 is the same as in the first embodiment. On the other hand, the lean solvent in the flash drum 3 is extracted from the flash drum 3 by the lean solvent pump 49 and flows through the lean solvent line 22 into the absorber 40. The rich solvent flowing through the rich solvent line 21 and the lean solvent flowing through the lean solvent line 22 exchange heat in the heat exchanger 47, so that the rich solvent is heated before entering the regenerator 2 while the lean solvent is cooled before entering the absorber 40. If the heat exchangers 50 and 51 are provided on the lean solvent line 22, the lean solvent is cooled not only in the heat exchanger 47 but also in the heat exchangers 50 and 51.

The above-described device for causing the solvent to absorb carbon dioxide includes the quencher 30 and the absorber 40, but the quencher 30 is not an essential component. If the temperature of the treated gas is sufficiently low and the concentration of impurities in the treated gas is also sufficiently low, the quencher 30 may be eliminated. If the quencher 30 is not provided, the treated gas line 31 is connected to the absorber 40.

As described above, the heating fluid can be heated in at least one of the first heat exchanger (condenser 13) or the second heat exchanger (heat exchanger 18) before being supplied to the reboiler 5. In the carbon dioxide recovery system having the configuration shown in FIG. 2, the heating fluid can also be heated by an additional heat exchanger. Specifically, such a heat exchanger may be, for example, the heat exchanger 32 (third heat exchanger) for exchanging heat between the heating fluid and the treated gas. Further, such a heat exchanger may be, for example, the heat exchanger 35 (fourth heat exchanger) for exchanging heat between the heating fluid and the cooling water extracted from the quencher 30. Further, such a heat exchanger may be, for example, the heat exchanger 43 (fifth heat exchanger) for exchanging heat between the heating fluid and the wash water extracted from the absorber 40. Further, such a heat exchanger may be, for example, the heat exchanger 45 (sixth heat exchanger) for exchanging heat between the heating fluid and the solvent extracted from the absorbing part 40a of the absorber 40. Further, such a heat exchanger may be, for example, the heat exchangers 50, 51 (seventh heat exchangers) for exchanging heat between the heating fluid and the lean solvent. Thus, the heat recovered in the carbon dioxide recovery system 1 can be used to heat the heating fluid, so the thermal efficiency of the carbon dioxide recovery system 1 can be improved as a whole. The heating is not limited to the embodiment in which the heating fluid is heated only by one of the first to seventh heat exchangers, and the heating fluid may be heated by two or more heat exchangers before supplied to the reboiler 5.

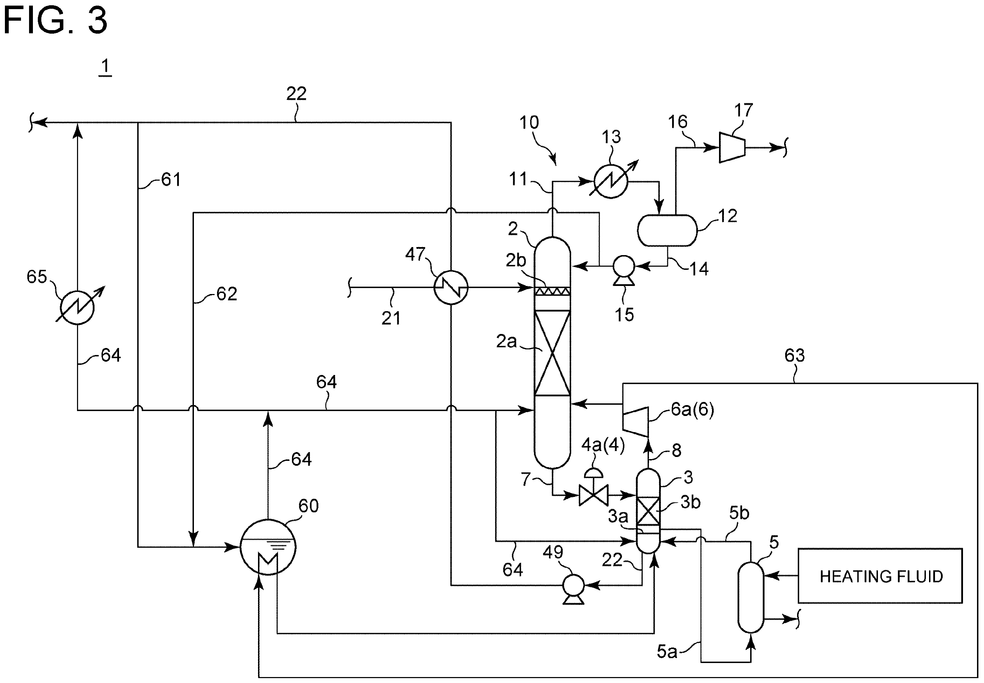

As the lean solvent is repeatedly reused in the absorber 40, non-volatile materials, such as contaminants from the treated gas due to gas-liquid contact in the absorber 40 and degradation products of the solvent, accumulate in the lean solvent. In order to remove such non-volatile accumulations from the lean solvent, a reclaimer may be provided. For example, as shown in FIG. 3, a branch line 61 diverging from the lean solvent line 22 may be provided, and the downstream end of the branch line 61 may be connected to a reclaimer 60. With this configuration, part of the lean solvent is supplied to the reclaimer 60. In FIG. 3, the branch line 61 is depicted as branching from the lean solvent line 22 downstream of the heat exchanger 47, but it may branch from the lean solvent line 22 upstream of the heat exchanger 47. A branch line 62 may be provided so as to branch from the condensate line 14 downstream of the pump 15 in the condensing device 10, and the downstream end of the branch line 62 may be connected to the branch line 61. With this configuration, part of water condensed in the condensing device 10 can also be supplied to the reclaimer 60.

Part of vapor from the compressor 6a can be used as a heat source for the reclaimer 60. To use part of the vapor from the compressor 6a as the heat source for the reclaimer 60, a vapor supply line 63 may be provided that branches from the line 8 at the compressor 6a, passes through the reclaimer 60, and is connected to the flash drum 3. In the reclaimer 60, the solvent in the reclaimer 60 and the vapor flowing through the vapor supply line 63 exchange heat, so that the solvent is heated to generate vapor. To discharge the vapor generated in the reclaimer 60 from the reclaimer 60, one end of an effluent vapor line 64 is connected to the reclaimer 60. The other end of the effluent vapor line 64 may be connected to the regenerator 2, the flash drum 3, or both the regenerator 2 and the flash drum 3. With this configuration, the vapor generated in the reclaimer 60, i.e., the lean solvent from which the non-volatile accumulations have been removed, is supplied to the regenerator 2, the flash drum 3, or both, so that the concentration of the non-volatile accumulations in the lean solvent can be reduced. Further, even if water condensed in the condensing device 10 contains non-volatile accumulations, by feeding the condensed water to the reclaimer 60, the non-volatile accumulations are removed in the reclaimer 60, so that the concentration of non-volatile accumulations in the lean solvent can be further reduced.

The other end of the effluent vapor line 64 may be connected to the lean solvent line 22 downstream of the heat exchanger 47, instead of the regenerator 2 and the flash drum 3. In this case, it is necessary to provide a condenser 65 on the effluent vapor line 64 to condense the vapor. When the vapor condenses in the condenser 65, due to the differential pressure, the vapor flows from the reclaimer 60 toward the lean solvent line 22. Also in this configuration, the lean solvent from which non-volatile accumulations have been removed is supplied to the absorber 40, so that the concentration of the non-volatile accumulations in the lean solvent can be reduced.

In the carbon dioxide recovery system 1, it may not be possible to use the heating fluid as the heat source for the reclaimer 60 to reduce the concentration of non-volatile accumulations in the lean solvent due to the low temperature of the heating fluid used as the heat source in the reboiler 5. However, by using the vapor from the compressor 6a as the heat source for the reclaimer 60, the concentration of non-volatile accumulations in the lean solvent can be reduced.

### (Second Embodiment)

Next, the carbon dioxide recovery system according to the second embodiment will be described. The carbon dioxide recovery system according to the second embodiment differs from the first embodiment in that the regenerator 2 includes a plurality of towers. In the second embodiment, the same constituent element as those in the first embodiment are associated with the same reference numerals and not described again in detail. The configurations of modifications described in the first embodiment can be applied to the second embodiment as long as there is no contradiction in configuration.

### <Configuration of carbon dioxide recovery system according to second embodiment of present disclosure>

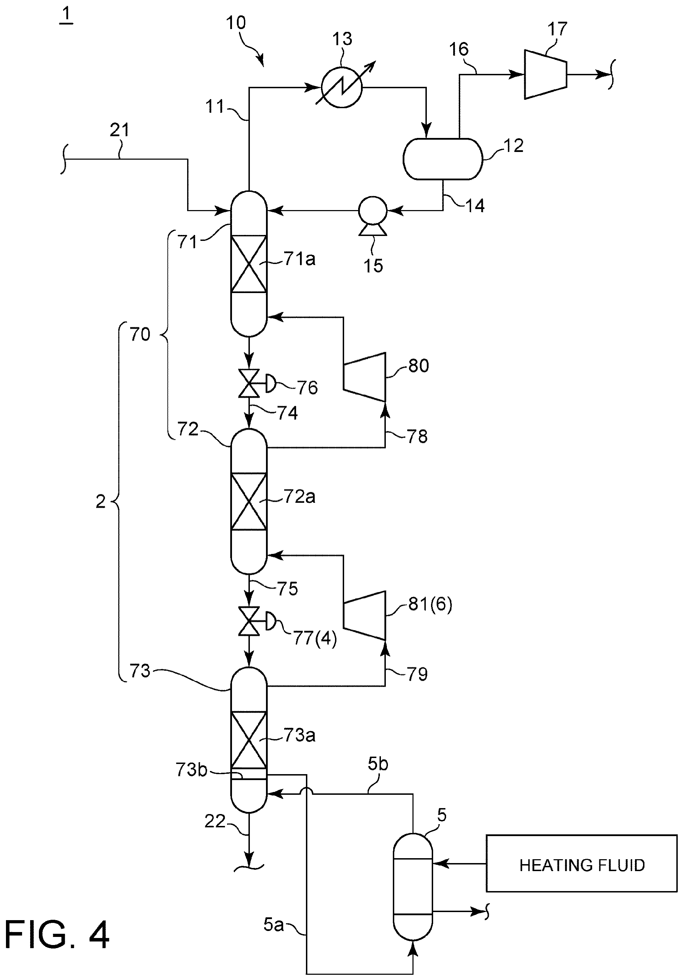

As shown in FIG. 4, in the carbon dioxide recovery system 1 according to the second embodiment, the regenerator 2 includes a first regenerator 70 including two regenerator sections 71, 72 that are directly connected to each other, and a second regenerator 73 connected to the downstream regenerator section 72 of the regenerator sections 71, 72. The regenerator sections 71, 72 and the second regenerator 73 have stripping parts 71a, 72a and 73a, respectively. In the second regenerator 73, a tray 73b is disposed below the stripping part 73a to collect the solvent entering the second regenerator 73. The stripping parts 71a, 72a, and 73a may have the same configuration as the stripping part 2a of the first embodiment, for example. The regenerator section 71 is provided with a condensing device 10. The configuration of the condensing device 10 is the same as in the first embodiment. The first regenerator 70 may include three or more regenerator sections, some of which may be connected in parallel.

A connection line 74 is provided to connect the bottom of the regenerator section 71 to the top of the regenerator section 72. The connection line 74 may be provided with a pressure reducing valve 76, which is a second pressure reducing device. A connection line 75 is provided to connect the bottom of the regenerator section 72 to the top of the second regenerator 73. The connection line 75 is provided with a pressure reducing valve 77, which is the pressure reducing device 4. A connection line 78 is provided to connect the space in the regenerator section 71 below the stripping part 71a to the space in the regenerator section 72 above the stripping part 72a. The connection line 78 is provided with a compressor 80, which is a second pressure boosting device. A connection line 79 is provided to connect the space in the regenerator section 72 below the stripping part 72a to the space in the second regenerator 73 above the stripping part 73a. The connection line 79 is provided with a compressor 81, which is the pressure boosting device 6.

The number of stages and the outlet pressure of the compressors 80, 81 are set preferably within the range where an intermediate cooler or desuperheater is not required. The operating pressures of the regenerator sections 71, 72 and the second regenerator 73 are preferably set to a pressure that takes into account the mechanical constraints of the compressors 80, 81 (e.g., the upper limit that can accommodate the operating temperature and the compression ratio per stage). The temperature difference between the outlet of the compressor 80 and the bottom of the regenerator section 71, and the temperature difference between the outlet of the compressor 81 and the bottom of the regenerator section 72 are set preferably within the range where a desuperheater is not required. This allows the energy of the temperature increase during the pressure increase by the compressors 80, 81 to be used for stripping carbon dioxide without energy loss.

As described below, in the second embodiment, the second regenerator 73, which is part of the regenerator 2, serves the function of the flash drum 3 (see FIG. 1) of the first embodiment. Therefore, the reboiler 5 is configured to heat the solvent by heat exchange between the solvent in the second regenerator 73 and the heating fluid, and one end of the lean solvent line 22 is connected to the bottom of the second regenerator 73. The configuration is otherwise the same as that of the first embodiment.

### <Operation of carbon dioxide recovery system according to second embodiment of present disclosure>

Next, the operation of the carbon dioxide recovery system 1 according to the second embodiment of the present disclosure will be described. The rich solvent flows into the regenerator section 71 through the rich solvent line 21. The rich solvent entering the regenerator section 71 flows down the stripping part 71a in the same manner as the rich solvent in the regenerator 2 (see FIG. 1) in the first embodiment. While flowing down the stripping part 71a, the rich solvent comes into contact with saturated vapor, which moves upward in the stripping part 71a by the operation described below, and is thus heated. As a result, at least part of carbon dioxide is stripped from the rich solvent. Although the rich solvent flowing out of the stripping part 71a has a lower carbon dioxide content than the rich solvent flowing through the rich solvent line 21, it is referred to as rich solvent for convenience of explanation in the second embodiment. On the other hand, the saturated vapor flowing out of the stripping part 71a is discharged from the top of the regenerator section 71 and is treated in the condensing device 10 in the same manner as in the first embodiment.

The rich solvent flowing out of the stripping part 71a is discharged from the regenerator section 71, then flows through the connection line 74, and enters the regenerator section 72. The rich solvent entering the regenerator section 72 flows down the stripping part 72a in the same manner as the rich solvent in the regenerator section 71. While flowing down the stripping part 72a, the rich solvent comes into contact with saturated vapor, which moves upward in the stripping part 72a by the operation described below, and is thus heated. As a result, at least part of carbon dioxide is stripped from the rich solvent, and the rich solvent becomes lean solvent and is discharged from the stripping part 72a. If the first regenerator 70 includes three or more regenerator sections, the solvent discharged from the most downstream regenerator section is referred to as lean solvent.

The saturated vapor contacting the rich solvent in the stripping part 72a and then flowing out of the stripping part 72a is discharged from the regenerator section 72 by the compressor 80 and flows into the regenerator section 71 through the connection line 78. The saturated vapor entering the regenerator section 71 moves upward in the regenerator section 71, and comes into contact with the rich solvent entering the regenerator section 71 in the stripping part 71a by the above-described operation. If the pressure reducing valve 76 is provided on the connection line 74, the rich solvent discharged from the regenerator section 71 enters the regenerator section 72 with the pressure reduced by the pressure reducing valve 76. Therefore, the rich solvent flashes in the regenerator section 72. That is, the regenerator section 72 has a function as a flash drum. This lowers the temperature of the rich solvent discharged from the regenerator section 71, compared to the case where the pressure reducing valve 76 is not provided.

The lean solvent flowing out of the stripping part 72a is discharged from the regenerator section 72, then flows through the connection line 75, and enters the second regenerator 73 with the pressure reduced by the pressure reducing valve 77. The lean solvent entering the second regenerator 73 flows down the stripping part 73a in the same manner as the rich solvent in the regenerator sections 71, 72. While flowing down the stripping part 73a, the lean solvent comes into contact with saturated vapor, which moves upward in the stripping part 73a by the operation described below, and is thus heated. As a result, more carbon dioxide is stripped from the lean solvent, and the lean solvent flows out of the stripping part 73a and is collected on the tray 73b. As in the regenerator section 72 with the pressure reducing valve 76, since the lean solvent with the pressure reduced by the pressure reducing valve 77 enters the second regenerator 73, the lean solvent flashes in the second regenerator 73. That is, the second regenerator 73 has a function as a flash drum.

The lean solvent collected on the tray 73b in the second regenerator 73 is continuously supplied to the reboiler 5 through the line 5a. In the reboiler 5, the lean solvent is heated by heat exchange with the heating fluid, and the heated lean solvent is returned to the second regenerator 73 through the line 5b. The heating in the reboiler 5 also causes carbon dioxide to be stripped from the lean solvent and water to evaporate. Since the lean solvent in the reboiler 5 is the lean solvent whose temperature has been lowered by flashing in the second regenerator 73, the temperature of the heating fluid required in the reboiler 5 can be lowered compared to the case where the lean solvent supplied from the regenerator section 72 is heated. Therefore, in the second embodiment, as in the first embodiment, instead of steam, a heat source of lower temperature (e.g., about 80°C) than steam, such as hot water, can be used as the heating fluid used in the reboiler 5, and this heat source can be used directly or via a heat pump.

The flash in the second regenerator 73 and the heating of the lean solvent in the reboiler 5 produce saturated vapor mainly containing carbon dioxide and water vapor in the second regenerator 73. This saturated vapor moves upward in the second regenerator 73. In this process, the saturated vapor moves upward in the stripping part 73a and comes into contact with the lean solvent by the above-described operation. The saturated vapor contacting the lean solvent in the stripping part 73a and then flowing out of the stripping part 73a is discharged from the second regenerator 73 by the compressor 81 and flows into the regenerator section 72 through the connection line 79. The saturated vapor entering the regenerator section 72 moves upward in the regenerator section 72 as described above, and comes into contact with the rich solvent in the stripping part 72a.

Thus, compared to the first embodiment including a single regenerator, the pressure and temperature in the regenerator section 72 are lowered, and the temperature of the lean solvent is further lowered by flashing the lean solvent in the second regenerator 73 which also serves as a flash drum, further lowering the temperature required for the heating fluid supplied to the reboiler 5. As a result, it is possible to strip carbon dioxide from the rich solvent and the lean solvent in the regenerator 2 by using a heat source with an even lower temperature.

Additionally, compared to the first embodiment, the temperature at the top of the regenerator section 71 is lowered, so that the amount of heat exchanged in the condenser 13 of the condensing device 10 is reduced. In other words, since the amount of exhaust heat in the condensing device 10 is reduced, the heat source unit in the carbon dioxide recovery system 1 is improved. Furthermore, compared to the first embodiment, the pressure at the top of the regenerator section 71 can be set higher, making it possible to increase the inlet pressure of the effluent gas compressor 17. This also reduces the compression ratio of the effluent gas compressor 17, which in turn reduces the power of the effluent gas compressor 17.

### (Third Embodiment)

Next, the carbon dioxide recovery system according to the third embodiment will be described. The carbon dioxide recovery system according to the third embodiment differs from the first and second embodiments in that the reboiler 5 is changed to a kettle reboiler. In the following, the third embodiment will be described with a modification of the first embodiment where the reboiler 5 is changed to a kettle reboiler, but the third embodiment may be a modification of the second embodiment where the reboiler 5 is changed to a kettle reboiler. In the third embodiment, the same constituent elements as those in the first embodiment are associated with the same reference numerals and not described again in detail. The configurations of modifications described in the first embodiment can be applied to the third embodiment as long as there is no contradiction in configuration.

### <Configuration of carbon dioxide recovery system according to third embodiment of present disclosure>

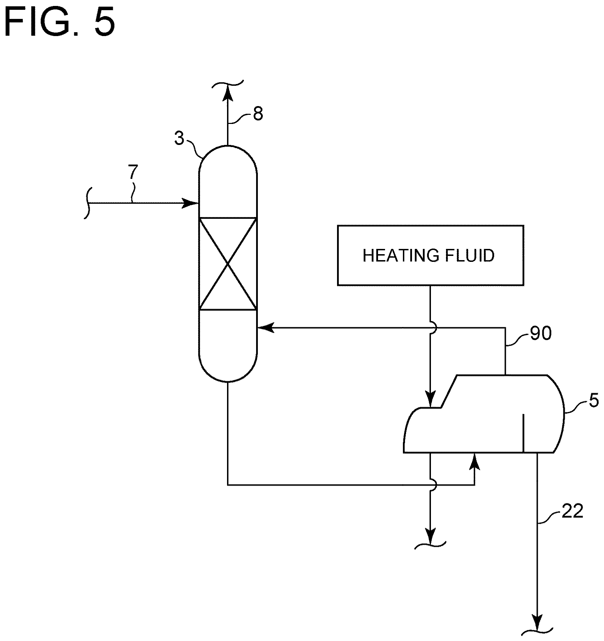

As shown in FIG. 5, in the carbon dioxide recovery system 1 according to the third embodiment, the reboiler 5 is a kettle reboiler. As described below, the lean solvent is separated into gas and liquid phases in the reboiler 5. To supply the separated gas phase to the flash drum 3, the reboiler 5 is connected to the flash drum 3 via a gas phase supply line 90. To discharge the separated liquid phase from the reboiler 5, one end of the lean solvent line 22 is connected to the reboiler 5. The configuration is otherwise the same as that of the first embodiment.

### <Operation of carbon dioxide recovery system according to third embodiment of present disclosure>

The operation of the third embodiment is the same as that of the first embodiment, except for the operation in the reboiler 5. Therefore, only the operation in the reboiler 5 will be described below. In the kettle reboiler 5, the lean solvent is in a vapor-liquid equilibrium state in the reboiler 5. In other words, in the reboiler 5, not only the lean solvent is heated, but also the lean solvent is separated into gas and liquid phases, and the reboiler 5 serves as one theoretical plate in the regeneration of the solvent. In the third embodiment, the gas phase obtained by the gas-liquid separation is supplied to the flash drum 3 through the gas phase supply line 90, and the liquid phase obtained by the gas-liquid separation is discharged from the reboiler 5 through the lean solvent line 22. The use of the kettle reboiler 5 not only heats the lean solvent, but also separates the lean solvent into gas and liquid phases, which facilitates stripping of carbon dioxide from the lean solvent in the flash drum 3.

### (Fourth Embodiment)

Next, the carbon dioxide recovery system according to the fourth embodiment will be described. The carbon dioxide recovery system according to the fourth embodiment differs from the first to third embodiments in that a steam ejector 6b is used as the pressure boosting device 6. In the following, the fourth embodiment will be described with a modification of the first embodiment where a steam ejector is used as the pressure boosting device 6, but the fourth embodiment may be a modification of the second or third embodiment where a steam ejector is used as the pressure boosting device 6. In the fourth embodiment, the same constituent elements as those in the first embodiment are associated with the same reference numerals and not described again in detail. The configurations of modifications described in the first embodiment can be applied to the fourth embodiment as long as there is no contradiction in configuration.

### <Configuration of carbon dioxide recovery system according to fourth embodiment of present disclosure>

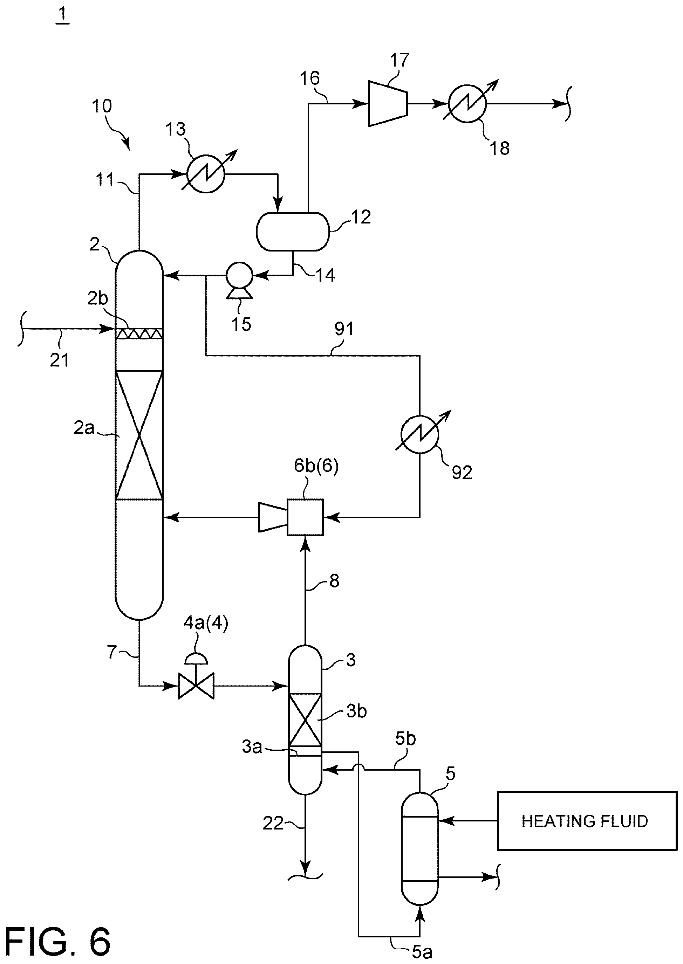

As shown in FIG. 6, in the carbon dioxide recovery system 1 according to the fourth embodiment, the pressure boosting device 6 is a steam ejector 6b. To the steam ejector 6b, one end of a steam supply line 91 for supplying driving steam as a driving source to the steam ejector 6b is connected. The configuration is otherwise the same as that of the first embodiment.

### <Operation of carbon dioxide recovery system according to fourth embodiment of present disclosure>

The operation of the fourth embodiment is the same as that of the first embodiment, except for the operation of supplying saturated vapor from the flash drum 3 to the regenerator 2. Therefore, only the operation of supplying saturated vapor from the flash drum 3 to the regenerator 2 will be described below. The saturated vapor discharged from the flash drum 3 flows through the line 8. Driving steam is supplied to the steam ejector 6b through the steam supply line 91. When the driving steam is jetted at high speed by a nozzle (not shown) of the steam ejector 6b, a low-pressure space is formed in the steam ejector 6b, and saturated vapor is drawn into the steam ejector 6b through the line 8. In the steam ejector 6b, the driving steam is accompanied and mixed with the saturated vapor toward the outlet, and the mixed vapor of the driving steam and the saturated vapor is discharged from the outlet while reducing the velocity in the diffuser section (not shown) of the steam ejector 6b. The mixed vapor discharged from the steam ejector 6b flows into the regenerator 2.

Thus, unlike the case where the compressor 6a (see FIG. 1) is used as the pressure boosting device 6, the use of the steam ejector 6b eliminates mechanical losses and is more energy-efficient than the use of the compressor 6a.

### <Modified example of carbon dioxide recovery system according to fourth embodiment of present disclosure>

In the fourth embodiment, the supply source of the driving steam is not specified, but any steam can be used. A driving steam generation device 92 may be provided on the steam supply line 91 to generate driving steam by heating water flowing through the steam supply line 91 by heat exchange between the heat source and the water in the driving steam generation device 92, and this driving steam may be supplied to the steam ejector 6b. In the fourth embodiment, since the driving steam is supplied together with the saturated vapor to the regenerator 2, it is necessary to remove water from the regenerator 2 to maintain the water balance in the regenerator 2. For this purpose, the other end of the steam supply line 91 may be connected to the condensate line 14 between the pump 15 and the regenerator 2, that is, the steam supply line 91 may branch from the condensate line 14 downstream of the pump 15 so that water condensed in the condensing device 10 is heated in the driving steam generation device 92 to generate the driving steam.

The heat source used to generate the driving steam in the driving steam generation device 92 may be any fluid. The driving steam generation device 92 may be, for example, the heat exchanger 18 (eighth heat exchanger) for exchanging heat between the effluent gas pressurized by the effluent gas compressor 17 and the water condensed in the condensing device 10. If two or more pairs of the effluent gas compressor 17 and the heat exchanger 18 are provided, any one of the heat exchangers 18 may be used as the eighth heat exchanger, or they may be used such that the heating fluid passes through the at least two heat exchangers 18 in parallel or in series. Further, the driving steam generation device 92 may be, for example, the heat exchanger 32 (ninth heat exchanger) for exchanging heat between the treated gas supplied to the quencher (see FIG. 2) and the water condensed in the condensing device 10. Further, the driving steam generation device 92 may be, for example, the heat exchanger 35 (tenth heat exchanger) for exchanging heat between the cooling water after cooling the treated gas in the quencher 30 and the water condensed in the condensing device 10. Further, two or all of the eighth heat exchanger, the ninth heat exchanger, and the tenth heat exchanger may be used simultaneously. The heat recovered in the carbon dioxide recovery system 1 can be used to generate driving steam supplied to the steam ejector 6b, so the thermal efficiency of the carbon dioxide recovery system 1 can be improved as a whole.

### <Modified example of carbon dioxide recovery system according to first, second, and fourth embodiments of present disclosure>

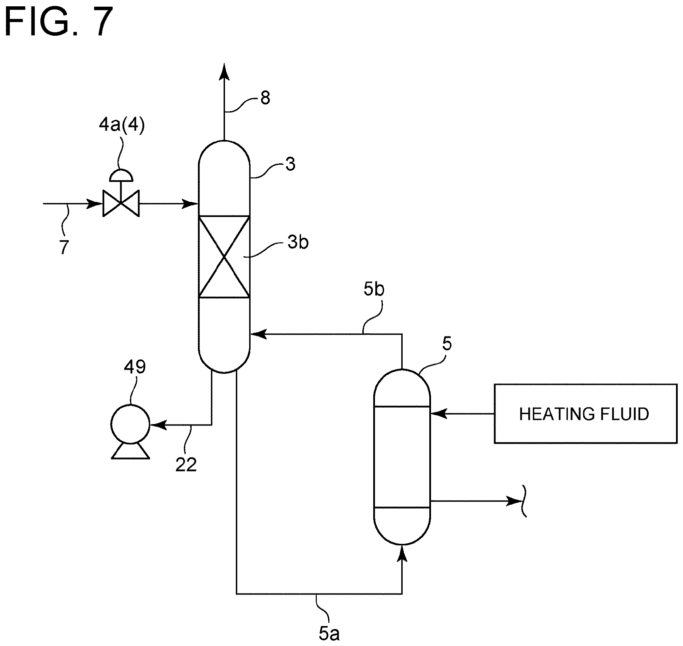

The reboiler 5 in the first and fourth embodiments and the second regenerator 73 in the second embodiment are each a once-through reboiler as illustrative examples, but FIG. 7 shows the configuration where the reboiler 5 is a thermosiphon reboiler. In the thermosiphon reboiler 5, a tray is not provided (see FIG. 1), and the line 5a is connected to the bottom of the flash drum 3. The configuration is otherwise the same as that of the once-through reboiler.

The operation of the thermosiphon reboiler 5 is the same as that of the once-through reboiler, except that the lean solvent with the reduced pressure entering the flash drum 3 via the line 7 and the lean solvent heated in the reboiler 5 and returned to the flash drum 3 are mixed at the bottom of the flash drum 3.

The contents described in the above embodiments would be understood as follows, for instance.
[1] A carbon dioxide recovery system according to one aspect is provided with: a regenerator (2) for stripping carbon dioxide from a solvent that has absorbed carbon dioxide; a flash drum (3) for flashing the solvent supplied from the regenerator (2); a pressure reducing device (4) for reducing a pressure of the solvent supplied from the regenerator (2) to the flash drum (3); a reboiler (5) for heating the solvent by heat exchange between the solvent in the flash drum (3) and a heating fluid; and a pressure boosting device (6) for supplying vapor generated in the flash drum (3) to the regenerator (2).
   With the carbon dioxide recovery system of the present disclosure, the temperature of the solvent is lowered by flashing the solvent in the flash drum, and the solvent with the lowered temperature is supplied to the reboiler, thus lowering the temperature required for the heating fluid supplied to the reboiler. As a result, it is possible to strip carbon dioxide from the solvent in the regenerator by using a heat source with a lower temperature than steam.
[2] A carbon dioxide recovery system according to another aspect is the carbon dioxide recovery system of [1], in which the regenerator (2) includes at least two regenerator sections (71, 72). The pressure reducing device (4) is configured to reduce a pressure of the solvent supplied from a most downstream regenerator section (72) of the at least two regenerator sections (71, 72) to the flash drum (second regenerator 73).
   With this configuration, compared to the case including a single regenerator, the pressure and temperature in the most downstream regenerator section are lowered, and the temperature of the solvent is further lowered by flashing the solvent in the flash drum, further lowering the temperature required for the heating fluid supplied to the reboiler. As a result, it is possible to strip carbon dioxide from the solvent in the regenerator by using a heat source with a lower temperature than in [1].
[3] A carbon dioxide recovery system according to sill another aspect is the carbon dioxide recovery system of [2], including: a second pressure reducing device (pressure reducing valve 76) for reducing a pressure of the solvent supplied from an upstream regenerator section (71) to a downstream regenerator section (72) of two regenerator sections (71, 72) that are directly connected to each other of the at least two regenerator sections (71, 72); and a second pressure boosting device (compressor 80) for supplying vapor in the downstream regenerator section (72) to the upstream regenerator section (71).
   With this configuration, it is possible to flash the solvent in the downstream regenerator. As a result, the temperature of the solvent flashed in the flash drum is further lowered, further lowering the temperature required for the heating fluid supplied to the reboiler. As a result, it is possible to strip carbon dioxide from the solvent in the regenerator by using a heat source with a lower temperature than in [2].
[4] A carbon dioxide recovery system according to sill another aspect is the carbon dioxide recovery system of any one of [1] to [3], in which the reboiler (5) is a kettle reboiler.
   In the kettle reboiler, not only the solvent is heated, but also the solvent is separated into gas and liquid phases. This facilitates stripping of carbon dioxide from the solvent in the reboiler, which in turn facilitates stripping of carbon dioxide in the regenerator.
[5] A carbon dioxide recovery system according to sill another aspect is the carbon dioxide recovery system of any one of [1] to [4], including at least one heat exchanger for heating at least part of the heating fluid by heat exchange between the at least part of the heating fluid and any of a fluid to be supplied to the carbon dioxide recovery system (1), a fluid in the carbon dioxide recovery system (1), or a fluid discharged from the carbon dioxide recovery system (1). The carbon dioxide recovery system is configured such that the heating fluid heated in the at least one heat exchanger is supplied to the reboiler (5).
   With this configuration, the heat recovered in the carbon dioxide recovery system can be used to heat the heating fluid, so the thermal efficiency of the carbon dioxide recovery system can be improved as a whole.
[6] A carbon dioxide recovery system according to sill another aspect is the carbon dioxide recovery system of any one of [1] to [5], in which the pressure boosting device (6) is a steam ejector (6b) for increasing a pressure of the vapor generated in the flash drum (3) by driving steam.
   With this configuration, unlike the case where the compressor is used as the pressure boosting device, the use of the steam ejector eliminates mechanical losses and is more energy-efficient than the use of the compressor.
[7] A carbon dioxide recovery system according to sill another aspect is the carbon dioxide recovery system of [6], including: a condensing device (10) for condensing water from effluent vapor discharged from the regenerator (2); and at least one driving steam generation device (92) for generating at least part of the driving steam by heating the water condensed in the condensing device (10).
   With this configuration, the heat recovered in the carbon dioxide recovery system can be used to generate driving steam supplied to the steam ejector, so the thermal efficiency of the carbon dioxide recovery system can be improved as a whole.
[8] A carbon dioxide recovery system according to sill another aspect is the carbon dioxide recovery system of any one of [1] to [7], including: an absorber (40) for causing the solvent to absorb carbon dioxide by bringing a treated gas containing at least carbon dioxide into gas-liquid contact with the solvent, the absorber (40) being configured to supply the solvent that has absorbed carbon dioxide to the regenerator (2); and a reclaimer (60) for generating vapor of the solvent by heat exchange between vapor discharged from a compressor (6a) which is the pressure boosting device (6) and part of the solvent discharged from the flash drum (3). The carbon dioxide recovery system is configured such that the vapor of the solvent is supplied to the absorber (40) or at least one of the regenerator (2) or the flash drum (3).
   With this configuration, even if the heating fluid cannot be used as a heat source for the reclaimer to reduce the concentration of non-volatile accumulations in the solvent due to the low temperature of the heating fluid used as a heat source in the reboiler, the vapor from the compressor can be used as the heat source for the reclaimer.
[9] A carbon dioxide recovery system according to sill another aspect is the carbon dioxide recovery system of [8], including a condensing device (10) for condensing water from effluent vapor discharged from the regenerator (2). The reclaimer (60) is configured to generate vapor of the solvent by heat exchange of vapor discharged from a compressor (6a) which is the pressure boosting device (6) with part of the solvent discharged from the flash drum (3) and part of the water condensed in the condensing device (10).

With this configuration, even if water condensed in the condensing device contains non-volatile accumulations, the non-volatile accumulations are removed in the reclaimer, so that the concentration of non-volatile accumulations in the solvent can be further reduced.

### Reference Signs List

- 1: Carbon dioxide recovery system
- 2: Regenerator
- 3: Flash drum
- 4: Pressure reducing device
- 5: Reboiler
- 6: Pressure boosting device
- 6a: Compressor
- 6b: Steam ejector
- 10: Condensing device
- 13: Condenser (Heat exchanger)
- 17: Effluent gas compressor
- 18: Heat exchanger
- 30: Quencher
- 32: Heat exchanger
- 35: Heat exchanger
- 40: Absorber
- 43: Heat exchanger
- 45: Heat exchanger
- 50: Heat exchanger
- 51: Heat exchanger
- 60: Reclaimer
- 71: Regenerator section
- 72: Regenerator section
- 73: Second regenerator (Flash drum)
- 76: Pressure reducing valve (Second pressure reducing device)
- 77: Pressure reducing valve (Pressure reducing device)
- 80: Compressor (Second pressure boosting device)
- 81: Compressor (Pressure boosting device)
- 92: Driving steam generation device

## Claims

1. A carbon dioxide recovery system, comprising:
a regenerator for stripping carbon dioxide from a solvent that has absorbed carbon dioxide;
a flash drum for flashing the solvent supplied from the regenerator;
a pressure reducing device for reducing a pressure of the solvent supplied from the regenerator to the flash drum;
a reboiler for heating the solvent by heat exchange between the solvent in the flash drum and a heating fluid; and
a pressure boosting device for supplying vapor generated in the flash drum to the regenerator.

2. The carbon dioxide recovery system according to claim 1,
wherein the regenerator includes at least two regenerator sections, and
wherein the pressure reducing device is configured to reduce a pressure of the solvent supplied from a most downstream regenerator section of the at least two regenerator sections to the flash drum.

3. The carbon dioxide recovery system according to claim 2, comprising:
a second pressure reducing device for reducing a pressure of the solvent supplied from an upstream regenerator section to a downstream regenerator section of two regenerator sections that are directly connected to each other of the at least two regenerator sections; and
a second pressure boosting device for supplying vapor in the downstream regenerator section to the upstream regenerator section.

4. The carbon dioxide recovery system according to any one of claims 1 to 3,
wherein the reboiler is a kettle reboiler.

5. The carbon dioxide recovery system according to any one of claims 1 to 3, comprising at least one heat exchanger for heating at least part of the heating fluid by heat exchange between the at least part of the heating fluid and any of a fluid to be supplied to the carbon dioxide recovery system, a fluid in the carbon dioxide recovery system, or a fluid discharged from the carbon dioxide recovery system,
wherein the carbon dioxide recovery system is configured such that the heating fluid heated in the at least one heat exchanger is supplied to the reboiler.

6. The carbon dioxide recovery system according to any one of claims 1 to 3,
wherein the pressure boosting device is a steam ejector for increasing a pressure of the vapor generated in the flash drum by driving steam.

7. The carbon dioxide recovery system according to claim 6, comprising:
a condensing device for condensing water from effluent vapor discharged from the regenerator; and
at least one driving steam generation device for generating at least part of the driving steam by heating the water condensed in the condensing device.

8. The carbon dioxide recovery system according to any one of claims 1 to 3, comprising:
an absorber for causing the solvent to absorb carbon dioxide by bringing a treated gas containing at least carbon dioxide into gas-liquid contact with the solvent, the absorber being configured to supply the solvent that has absorbed carbon dioxide to the regenerator; and
a reclaimer for generating vapor of the solvent by heat exchange between vapor discharged from a compressor which is the pressure boosting device and part of the solvent discharged from the flash drum,
wherein the carbon dioxide recovery system is configured such that the vapor of the solvent is supplied to the absorber or at least one of the regenerator or the flash drum.

9. The carbon dioxide recovery system according to claim 8, comprising a condensing device for condensing water from effluent vapor discharged from the regenerator,
wherein the reclaimer is configured to generate vapor of the solvent by heat exchange of vapor discharged from a compressor which is the pressure boosting device with part of the solvent discharged from the flash drum and part of the water condensed in the condensing device.
